# EUROPEAN PATENT APPLICATION

(11) **EP 4 765 776 A1**
(43) Date of publication of application: **24.06.2026**
(21) Application number: 25217501.3
(22) Date of filing: 20.11.2025
(51) Int. Cl.: H04L 67/12, H04W 4/46

(54) **INFORMATION PROCESSING DEVICE, VEHICLE, AND INFORMATION PROCESSING METHOD**

(30) Priority: 17.12.2024 JP 2024221041
(71) Applicant: Toyota Jidosha Kabushiki Kaisha, Toyota-shi, Aichi-ken 471-8571 (JP)
(72) Inventor: SUGIMOTO, Shingo, Toyota-shi, Aichi-ken 471-8571 (JP); ITO, Yuma, Toyota-shi, Aichi-ken 471-8571 (JP); JENKITTIKUL, Napak, Toyota-shi, Aichi-ken 471-8571 (JP)
(74) Representative: Simmons & Simmons

(57) **Abstract**

An information processing device (10) includes a control unit (12), in which the control unit (12) is configured to receive vehicle information from each of a plurality of vehicles (20) indicating at least one of status and position of each of the vehicles (20), decide on hub vehicles (20-1) to serve as hubs for providing data, from among the vehicles (20) based on the vehicle information, transmit predetermined data to the hub vehicles (20-1), decide on, for each of the hub vehicles (20-1), client vehicles (20-2, 20-3) with which the predetermined data is to be shared, based on the vehicle information, and transmit, to each of the hub vehicles (20-1), information for identifying the corresponding client vehicles (20-2, 20-3), to share the predetermined data with the client vehicles (20-2, 20-3).

## Description

### BACKGROUND OF THE INVENTION

### 1. Field of the Invention

The present disclosure relates to an information processing device, a vehicle, and an information processing method.

### 2. Description of Related Art

In recent years, inter-vehicle communication systems for communication among vehicles have been developed. For example, Japanese Unexamined Patent Application Publication No. 2022-018362 (JP 2022-018362 A) discloses a communication device that is installed a vehicle, and that has a first communication circuit that operates as an access point in infrastructure mode and transmits and receives radio waves forward of the vehicle, and a second communication circuit that operates as a station in the infrastructure mode and transmits and receives radio waves forward of the vehicle, in order to facilitate establishing wireless links with vehicles entering an intersection. Such inter-vehicle communication systems enable inter-vehicle file sharing.

### SUMMARY OF THE INVENTION

However, the files that each of the vehicles requests, and the timings at which the files are requested, differ. Accordingly, a more efficient method of inter-vehicle sharing of files is required.

The present disclosure provides an information processing device, a vehicle, and an information processing method that enable efficient inter-vehicle file sharing.

An information processing device according to an embodiment of the present disclosure includes a control unit, in which the control unit is configured to receive vehicle information from each of a plurality of vehicles indicating at least one of status and position of each of the vehicles, decide on hub vehicles to serve as hubs for providing data, from among the vehicles based on the vehicle information, transmit predetermined data to the hub vehicles, decide on, for each of the hub vehicles, client vehicles with which the predetermined data is to be shared, based on the vehicle information, and transmit, to each of the hub vehicles, information for identifying the corresponding client vehicles, to share the predetermined data with the client vehicles.

In the information processing device according to an embodiment of the present disclosure, deciding of each of the hub vehicles may include deciding from among the vehicles, based on the vehicle information, a vehicle that falls under at least one condition of a vehicle with surplus power of or above a predetermined threshold value, a vehicle with surplus data capacity of or above a predetermined threshold value, a vehicle that has been parked for a long time, a vehicle that is expected to be parked for a long time, a vehicle regarding which another vehicle has been within a predetermined range for a certain amount of time or more, and a vehicle connected to public Wi-Fi, to be the hub vehicle.

In the information processing device according to an embodiment of the present disclosure, deciding of each of the hub vehicles may include deciding from among the vehicles, based on the vehicle information, a vehicle that falls under any one condition of whether a vehicle with surplus power of or above a predetermined threshold value, whether a vehicle with surplus data capacity of or above a predetermined threshold value, whether a vehicle that has been parked for a long time, whether a vehicle that is expected to be parked for a long time, whether a vehicle regarding which another vehicle has been within a predetermined range for a certain amount of time or more, and whether a vehicle connected to public Wi-Fi, in this order of priority, to be the hub vehicle.

In the information processing device according to an embodiment of the present disclosure, deciding of the client vehicles may include deciding on vehicles that are determined to be the same as or resemblant to the hub vehicles with respect to at least one of vehicle class and model, to be the client vehicles.

In the information processing device according to an embodiment of the present disclosure, the control unit may be further configured to, for each of the hub vehicles, relieve, when a predetermined amount of time has elapsed since the hub vehicle was decided to be a hub vehicle, or when a count of times that the predetermined data has been transmitted to the hub vehicle exceeds a predetermined count of times, the hub vehicle from being the hub vehicle.

In the information processing device according to an embodiment of the present disclosure, the control unit may be further configured to provide the hub vehicles with a reward in accordance with an amount of data transmitted to the client vehicles.

A vehicle according to an embodiment of the present disclosure is a vehicle that communicates with an information processing device, in which the vehicle is configured to transmit vehicle information indicating at least one of status and position of the vehicle to the information processing device, receive predetermined data from the information processing device when the vehicle is decided by the information processing device to be a hub vehicle to serve as a hub for providing data, based on the vehicle information, and transmit, upon receiving identification information identifying client vehicles with which the predetermined data is to be shared from the information processing device, the predetermined data received from the information processing device to the client vehicles identified by the identification information.

In the vehicle according to an embodiment of the present disclosure, the vehicle may be further configured to, upon receiving information identifying the client vehicles from the information processing device, receive from the client vehicles a version of the predetermined data stored in the client vehicles, and transmit to the client vehicles just differential data between that version of the predetermined data and a latest version of the predetermined data, or transmit just compressed data of the differential data.

In the vehicle according to an embodiment of the present disclosure, the vehicle may be configured to, when the information processing device decides on the vehicle to be the hub vehicle, transmit the predetermined data to the client vehicles, when a predetermined count or more of the client vehicles are stopped in a vicinity of the vehicle, when, at an intersection, the client vehicles are stopped at a traffic light, or when the vehicle passes the client vehicles traveling in opposite directions, when, on an expressway, relative speed between the vehicle and the client vehicles is equal to or less than a threshold value, or when the vehicle is being charged or in pre-cooling operations.

In the vehicle according to an embodiment of the present disclosure, when falling under at least one condition of surplus power of or above a predetermined threshold value, surplus data capacity of or above a predetermined threshold value, having been parked for a long time, expected to be parked for a long time, another vehicle has been within a predetermined range for a certain amount of time or more, and connected to public Wi-Fi, the information processing device may decide on the vehicle to be the hub vehicle.

In the vehicle according to an embodiment of the present disclosure, when falling under any one condition of whether a vehicle with surplus power of or above a predetermined threshold value, whether a vehicle with surplus data capacity of or above a predetermined threshold value, whether a vehicle that has been parked for a long time, whether a vehicle that is expected to be parked for a long time, whether a vehicle regarding which another vehicle has been within a predetermined range for a certain amount of time or more, and whether a vehicle connected to public Wi-Fi, in this order of priority, the information processing device may decide on the vehicle to be the hub vehicle.

A vehicle according to an embodiment of the present disclosure is a vehicle that communicates with an information processing device, in which the vehicle is configured to transmit vehicle information indicating at least one of status and position of the vehicle to the information processing device, and upon the information processing device deciding on the vehicle to be a client vehicle that shares predetermined data, based on the vehicle information, receive predetermined data from a hub vehicle that has been decided on, by the information processing device, to be a vehicle to serve as a hub for providing data, based on the vehicle information.

In the vehicle according to an embodiment of the present disclosure, the vehicle may be further configured to transmit a version of the predetermined data that is stored in the vehicle, to the hub vehicle, and to receive from the hub vehicle just differential data between that version of the predetermined data and a latest version of the predetermined data, or just compressed data of the differential data.

In the vehicle according to an embodiment of the present disclosure, when the vehicle is the same as or resemblant to the hub vehicle with respect to at least one of vehicle class and model, the information processing device may decide on the vehicle to be the client vehicle.

An information processing method according to an embodiment of the present disclosure includes an information processing device executing receiving vehicle information from each of a plurality of vehicles indicating at least one of status and position of each of the vehicles, deciding on hub vehicles to serve as hubs for providing data, from among the vehicles based on the vehicle information, transmitting predetermined data to the hub vehicles, deciding on, for each of the hub vehicles, client vehicles with which the predetermined data is to be shared, based on the vehicle information, and transmitting, to each of the hub vehicles, information for identifying the corresponding client vehicles, to share the predetermined data with the client vehicles.

In the information processing method according to an embodiment of the present disclosure, deciding of each of the hub vehicles may include deciding from among the vehicles, based on the vehicle information, a vehicle that falls under at least one condition of a vehicle with surplus power of or above a predetermined threshold value, a vehicle with surplus data capacity of or above a predetermined threshold value, a vehicle that has been parked for a long time, a vehicle that is expected to be parked for a long time, a vehicle regarding which another vehicle has been within a predetermined range for a certain amount of time or more, and a vehicle connected to public Wi-Fi, to be the hub vehicle.

In the information processing method according to an embodiment of the present disclosure, deciding on of each of the hub vehicles may include deciding from among the vehicles, based on the vehicle information, a vehicle that falls under any one condition of whether a vehicle with surplus power of or above a predetermined threshold value, whether a vehicle with surplus data capacity of or above a predetermined threshold value, whether a vehicle that has been parked for a long time, whether a vehicle that is expected to be parked for a long time, whether a vehicle regarding which another vehicle has been within a predetermined range for a certain amount of time or more, and whether a vehicle connected to public Wi-Fi, in this order of priority, to be the hub vehicle.

In the information processing method according to an embodiment of the present disclosure, deciding of the client vehicles may include deciding on vehicles that are determined to be the same as or resemblant to the hub vehicles with respect to at least one of vehicle class and model, to be the client vehicles.

The information processing method according to an embodiment of the present disclosure may further include, for each of the hub vehicles, relieving, when a predetermined amount of time has elapsed since the hub vehicle was decided to be a hub vehicle, or when a count of times that the predetermined data has been transmitted to the hub vehicle exceeds a predetermined count of times, the hub vehicle from being the hub vehicle.

The information processing method according to an embodiment of the present disclosure may further include providing the hub vehicle with a reward in accordance with an amount of data transmitted to the client vehicles.

According to the present disclosure, inter-vehicle sharing of files can be efficiently performed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a schematic configuration of an information processing system according to an embodiment of the present disclosure;
FIG. 2 is a diagram illustrating a schematic configuration of a vehicle in the information processing system according to the embodiment of the present disclosure; and
FIG. 3 is a sequence diagram showing an example of operations of the information processing system according to the embodiment of the present disclosure.

### DETAILED DESCRIPTION OF EMBODIMENTS

An embodiment of the present disclosure will be described in detail below with reference to the drawings.

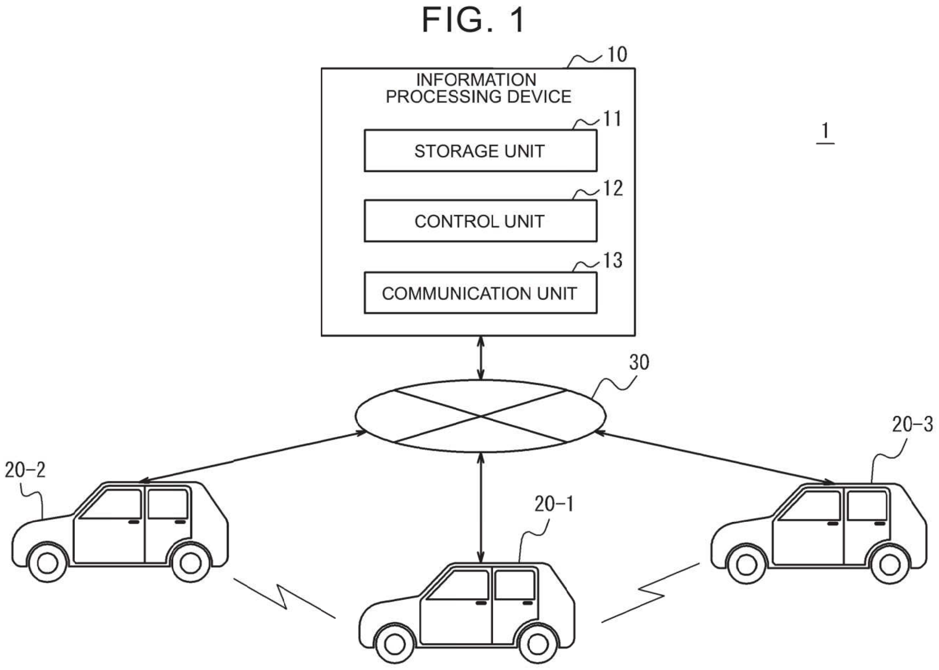

A configuration of an information processing system according to the embodiment will be described with reference to FIG. 1. The information processing system 1 illustrated in FIG. 1 includes an information processing device 10 and a plurality of vehicles 20. The information processing device 10 and the vehicles 20 are connected to each other so as to be able to communicate via a network 30, including the Internet.

The information processing device 10 is a server that controls inter-vehicle communication. The information processing device 10 includes a storage unit 11, a control unit 12, and a communication unit 13.

The communication unit 13 includes a communication interface for communicating with the vehicles 20. The information processing device 10 receives, from each of the vehicles 20, vehicle information indicating at least one of status and position of each of the vehicles 20, via the communication unit 13 and the network 30. The term "status of vehicle" includes, for example, surplus power, surplus data capacity, whether parked, whether connected to public Wi-Fi (registered trademark), and so forth.

The storage unit 11 includes at least one semiconductor memory, at least one magnetic memory, at least one optical memory, or any combination thereof. The semiconductor memory is random access memory (RAM), read-only memory (ROM), or flash memory, for example. The storage unit 11 stores the latest predetermined data (predetermined files) that can be requested by each of the vehicles 20. The term "predetermined data" refers to, for example, a file for updating electronic equipment, such as an engine control unit (ECU) or the like installed in each of the vehicles 20. The predetermined data may be map information, traffic information, or the like. Also, the information processing device 10 stores the vehicle information received from each of the vehicles 20 in the storage unit 11.

The control unit 12 includes at least one processor, at least one programmable circuit, at least one dedicated circuit, or any combination thereof. The processor is a general-purpose processor such as a central processing unit (CPU) or a graphics processing unit (GPU), or a dedicated processor specialized for particular processing. The programmable circuit is, for example, a field-programmable gate array (FPGA). The dedicated circuit is, for example, an application specific integrated circuit (ASIC). The control unit 12 executes processing related to the operations of the information processing device 10 while controlling various units of the information processing device 10.

Based on the vehicle information acquired from the vehicles 20, the control unit 12 decides on (selects) a vehicle (hereinafter referred to as a "hub vehicle") from among the multiple vehicles 20 to serve as a hub for providing data. The control unit 12 may decide on a plurality of hub vehicles. For the sake of convenience, the hub vehicle will be referred to as "vehicle 20-1" in the present specification.

Based on the vehicle information, the control unit 12 decides on, from among the vehicles 20, a vehicle that falls under at least one of the following conditions, as the hub vehicle 20-1.
- Vehicle with surplus power of or above a predetermined threshold value
- Vehicle with surplus data capacity of or above a predetermined threshold value
- Vehicle that has been parked for a long time, over a predetermined amount of time or more
- Vehicle that is expected to be parked for a long time, over a predetermined amount of time or more
- Vehicle regarding which another vehicle has been within a predetermined range for a certain amount of time or more
- Vehicle connected to public Wi-Fi

When deciding the hub vehicle based on surplus power, the control unit 12 may decide on the hub vehicle in accordance with a predetermined order, such as for example, battery electric vehicle (BEV), plug-in hybrid electric vehicle (PHEV), hybrid electric vehicle (HEV), and conventional car, or the like. Also, the control unit 12 may decide on a PHEV to be the hub vehicle only when the PHEV is being charged.

A "vehicle expected to be parked for a long time" refers to vehicles parked in places such as, for example, shopping malls, stadiums, event venues, and so forth. The control unit 12 may analyze big data received from each of the vehicles 20 to decide on "vehicle expected to be parked for a long time".

A "Vehicle regarding which another vehicle has been within a predetermined range for a certain amount of time or more" refers to vehicles that have other vehicles located within close proximity for a long period of time, such as for example, vehicles traveling in a group on an expressway, that do not overtake or pass other vehicles, and of which relative position to other vehicles changes little, or the like. The control unit 12 may analyze big data received from each of the vehicles 20 to decide on a "vehicle regarding which another vehicle has been within a predetermined range for a certain amount of time or more".

The control unit 12 can cause a "vehicle connected to public Wi-Fi" to download predetermined data free of charge.

Alternatively, the control unit 12 decides on, based on the vehicle information, one of the vehicles 20 according to the following priority order, for example, to be the hub vehicle.
1. Vehicle with surplus power of or above a predetermined threshold value
2. Vehicle with surplus data capacity of or above a predetermined threshold value
3. Vehicle that has been parked for a long time, over a predetermined amount of time or more
4. Vehicle that is expected to be parked for a long time, over a predetermined amount of time or more
5. Vehicle regarding which another vehicle has been within a predetermined range for a certain amount of time or more
6. Vehicle connected to public Wi-Fi

Note that when selecting the hub vehicle 20-1, the control unit 12 may notify a user of the vehicle 20-1 that it has been selected as a hub vehicle, and officially decide on the hub vehicle upon having obtained consent from the user. Also, when signing a contract for the vehicle, consent may be obtained in advance from the user regarding the possibility of the vehicle becoming a hub vehicle.

Next, the control unit 12 transmits predetermined data to the hub vehicle 20-1 and, based on the vehicle information, decides on (selects), for each of the hub vehicles 20-1, vehicles (hereinafter referred to as "client vehicles") with which to share the predetermined data. When the hub vehicle is different, the corresponding client vehicles (with which inter-vehicle communication is to be performed) can be different. Moreover, client vehicles corresponding to the hub vehicle may also change over time. In the present specification, for convenience of description, the client vehicles corresponding to the hub vehicle 20-1 are referred to as vehicle 20-2 and the vehicle 20-3, but the number of client vehicles may be one, or may be three or more.

The control unit 12 decides on, from among the vehicles 20, the vehicles 20-2 and 20-3 that are in a location where inter-vehicle communication with the hub vehicle 20-1 can be performed (e.g., within 100 m in an open site), as client vehicles. Locations where inter-vehicle communication can be actively performed include large parking lots, large intersections, expressways, expressway rest areas and service areas, and large filling stations with adjoining convenience stores, coffee shops and so forth. Note that there conceivably is a high possibility that the map information that can be requested by vehicles traveling on an expressway will be the same.

The hub vehicle 20-1 may store predetermined data that can be requested by all vehicles 20, but in order to reduce the amount of data to be stored, the hub vehicle 20-1 may receive from the information processing device 10, and store just predetermined data that matches the vehicle class or model of the hub vehicle 20-1, for example. In this case, the predetermined data is likely to be common for each vehicle class or model, and accordingly the control unit 12 decides on vehicles, regarding which determination is made to be the same as or resemblant to the hub vehicle 20-1 in at least one of vehicle class and model, to be the client vehicles 20-2 and 20-3. "Vehicle class" refers to a class of a vehicle based on, for example, body size, make, grade, and so forth. "Model" is a classification code for vehicles that have, for example, the same structure, equipment, capabilities, and so forth.

Next, the control unit 12 controls the communication unit 13 to share the predetermined data with the client vehicles 20-2 and 20-3 (i.e., to cause the hub vehicle 20-1 to recognize the corresponding client vehicles 20-2 and 20-3), and transmits identification information (e.g., vehicle identification numbers) that identifies the corresponding client vehicles 20-2 and 20-3 for each of the hub vehicles 20-1.

The amount of communication among the hub vehicle 20-1, the information processing device 10 and the client vehicle 20-2 increases. Therefore, the control unit 12 relieves each of the hub vehicles 20-1 from being a hub vehicle when a predetermined amount of time has elapsed since the hub vehicle 20-1 was decided on, or when the count of times predetermined data has been transmitted to the hub vehicle 20-1 exceeds a predetermined count of times. This processing can suppress the performance of the battery or storage unit of the hub vehicle 20-1 from deteriorating.

The control unit 12 may provide the hub vehicle 20-1 with a reward according to the amount of data transmitted to the client vehicles 20-2 and 20-3. The type of reward is optional, and for example, the control unit 12 sets digital currency, points that can be exchanged for vouchers, reductions in lease fees, merchandise, or the like, as rewards.

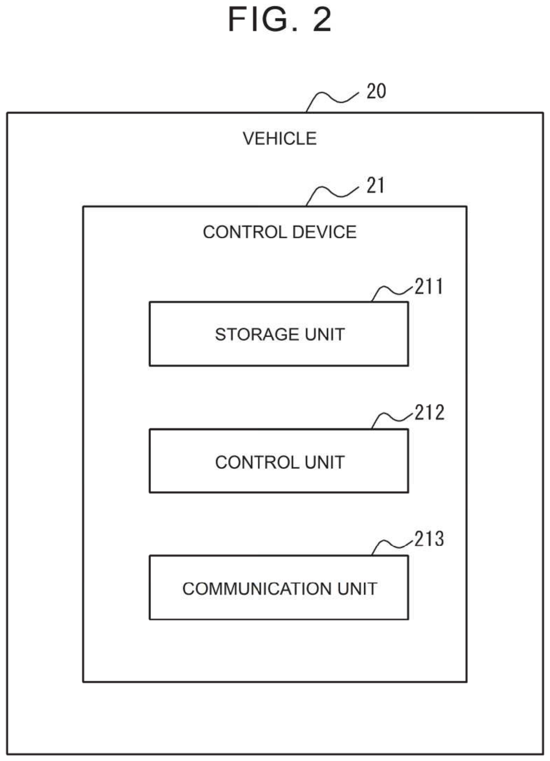

FIG. 2 is a block diagram illustrating a schematic configuration of one of the vehicles 20. The vehicle 20 is equipped with a control device 21. The control device 21 includes a storage unit 211, a control unit 212, and a communication unit 213.

The storage unit 211 includes at least one semiconductor memory, at least one magnetic memory, at least one optical memory, or any combination thereof. The semiconductor memory is, for example, RAM, ROM, or flash memory. The storage unit 211 of the hub vehicle 20-1 stores the predetermined data received from the information processing device 10. The storage units 211 of the client vehicles 20-2 and 20-3 store the predetermined data received from the hub vehicle 20-1.

The control unit 212 includes at least one processor, at least one programmable circuit, at least one dedicated circuit, or any combination thereof. The processor is a general-purpose processor such as a CPU, a GPU, or the like, or a dedicated processor specialized for particular processing. The programmable circuit is, for example, an FPGA. The dedicated circuit is, for example, an ASIC. The control unit 212 executes processing related to operations of the vehicle 20 while controlling each unit of the vehicle 20.

The communication unit 213 includes a communication interface for communicating with the information processing device 10 (e.g., cellular communication) and a communication interface for performing inter-vehicle communication with other vehicles 20 (e.g., Wi-Fi communication). The communication unit 213 of each of the vehicles transmits vehicle information to the information processing device 10.

The communication unit 213 of the hub vehicle 20-1 receives the predetermined data from the information processing device 10. The storage unit 211 of the hub vehicle 20-1 stores the predetermined data. Upon receiving identification information identifying the client vehicles 20-2 and 20-3 from the information processing device 10, the communication unit 213 of the hub vehicle 20-1 then transmits the predetermined data received from the information processing device 10 to the client vehicles 20-2 and 20-3 identified by the identification information.

The timing at which the communication unit 213 of the hub vehicle 20-1 transmits the predetermined data to the client vehicles 20-2 and 20-3 (the hub vehicle 20-1 and the client vehicles 20-2 and 20-3 transition to data sharing mode) is when the distance to the client vehicles 20-2 and 20-3 is within a distance at which inter-vehicle communication can likely be established (e.g., within 100 m) and communication is established with the client vehicles 20-2 and 20-3. For example, in a parking lot, a filling station, an expressway rest area or service area, or the like, when a great number, i.e., a predetermined number or more, of client vehicles 20-2 and 20-3 are stopped in the vicinity of the hub vehicle 20-1, the mode transitions to data sharing mode. At an intersection, when the hub vehicle 20-1 and the client vehicles 20-2 and 20-3 are stopped waiting for a traffic light, or when the hub vehicle 20-1 passes the client vehicles 20-2 and 20-3 traveling in opposite directions at the intersection, the mode transitions to data sharing mode. On an expressway, when vehicles are traveling in a group and a relative speed between the hub vehicle 20-1 and the client vehicles 20-2 and 20-3 is small and below a threshold value, the mode transitions to data sharing mode. When the hub vehicle 20-1 is charging or in pre-cooling operations using power externally supplied to the vehicle, the state is such that power is being supplied and communication can be performed without concern regarding power, and accordingly the vehicle may be configured to actively transition to data sharing mode.

The control unit 212 of the hub vehicle 20-1 may divide the predetermined data, and the communication unit 213 of the hub vehicle 20-1 may transmit the predetermined data that has been divided to the client vehicles 20-2 and 20-3. This enables the proportion of the predetermined data that is reused in multiple usages to be improved. For example, when predetermined data A requested by a client vehicle 20-2 consists of data a and data b, and predetermined data B requested by a client vehicle 20-3 consists of data a and data c, preparing the divided data a, b, and c enables data a to be reused.

The control unit 212 of the hub vehicle 20-1 may have a version management function for the predetermined data and may be synchronized with the information processing device 10. Furthermore, when the client vehicles 20-2 and 20-3 have a self-compiling environment or an interpreter-type execution environment, the communication unit 213 of the hub vehicle 20-1 may receive information from the client vehicles 20-2 and 20-3, regarding the version of the predetermined data stored in the client vehicles 20-2 and 20-3, and transmit only the differential data between that version of the predetermined data and the latest version of the predetermined data, or only compressed data of the differential data, to the client vehicles 20-2 and 20-3. This processing enables the hub vehicle 20-1 to transmit to the client vehicles 20-2 and 20-3 only the data that could be requested to update the software to the latest version.

The communication units 213 of the client vehicles 20-2 and 20-3 receive the predetermined data from the hub vehicle 20-1. The storage units 211 of the client vehicles 20-2 and 20-3 store the predetermined data. When the client vehicles 20-2 and 20-3 have a self-compiling environment or an interpreter-type execution environment, the communication units 213 of the client vehicles 20-2 and 20-3 may transmit information regarding the version of the predetermined data stored in the storage units 211 of the client vehicles 20-2 and 20-3 to the hub vehicle 20-1, and may receive only the difference data between that version of the predetermined data and the latest version of the predetermined data, or only compressed data of the difference data, from the hub vehicle 20-1. This processing enables the client vehicles 20-2 and 20-3 to receive only the data that could be requested to update the software to the latest version.

### Operation Example of Information Processing System

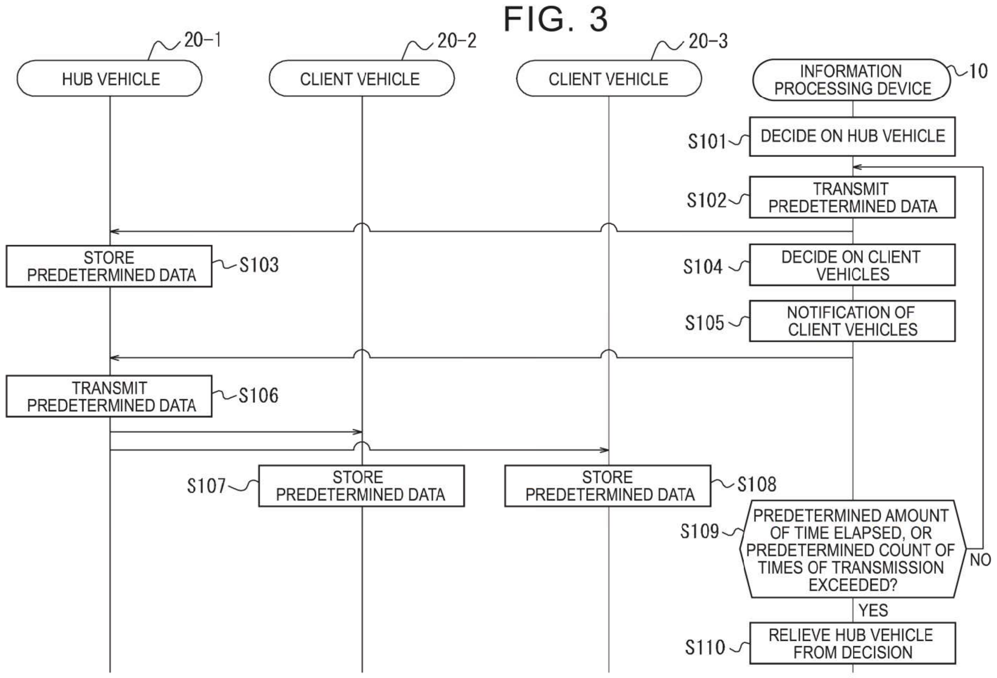

Next, operations of the information processing system 1 according to the embodiment will be described with reference to FIG. 3. It will be assumed that each of the vehicles 20 transmits vehicle information to the information processing device 10 periodically (e.g., at intervals of several seconds).

In S101, the information processing device 10 decides on the hub vehicle 20-1 from among the vehicles 20 in accordance with the above-described rules for deciding on the hub vehicle.

In S102, the information processing device 10 transmits the latest predetermined data (e.g., update file) to the hub vehicle 20-1 decided on in S101.

In S103, the hub vehicle 20-1 receives the latest predetermined data from the information processing device 10, and performs storage thereof.

In S104, the information processing device 10 decides on the client vehicles 20-2 and 20-3 from among the vehicles 20 in accordance with the above-described rules for deciding of the client vehicles.

In S105, the information processing device 10 transmits information for identifying the corresponding client vehicles 20-2 and 20-3 (with which inter-vehicle communication should be performed) to the hub vehicle 20-1.

In S106, the hub vehicle 20-1 establishes communication with the client vehicle 20-2 and transmits the predetermined data to the client vehicle 20-2. The hub vehicle 20-1 also establishes communication with the client vehicle 20-3 and transmits the predetermined data to the client vehicle 20-3. As described above, the hub vehicle 20-1 may transmit the predetermined data that is divided, difference data as to the latest version of the predetermined data, or data in which the difference data has been compressed, to the client vehicles 20-2 and 20-3.

In S107, the client vehicle 20-2 receives the predetermined data from the hub vehicle 20-1 and performs storage thereof. In S108, the client vehicle 20-3 receives the predetermined data from the hub vehicle 20-1 and performs storage thereof.

In S109, the information processing device 10 determines whether a first condition, that a predetermined amount of time has elapsed since the vehicle 20-1 was decided to be a hub vehicle, or a second condition, that the count of times predetermined data has been transmitted to the hub vehicle 20-1 exceeds a predetermined count of times, is satisfied. When the first condition or the second condition is satisfied, the information processing device 10 advances the processing to step S110, and when neither the first condition nor the second condition is satisfied, the information processing device 10 returns the processing to step S102.

In S110, the information processing device 10 relieves the vehicle 20-1 from being the hub vehicle.

As described above, the information processing device 10 according to the present embodiment receives vehicle information regarding each of the vehicles 20, from each of the vehicles 20, decides on a hub vehicle 20-1 from among the vehicles 20 based on the vehicle information, transmits predetermined data to the hub vehicle 20-1, decides on client vehicles 20-2 and 20-3 for each of the hub vehicles 20-1 based on the vehicle information, and transmits information identifying the corresponding client vehicles 20-2 and 20-3 for each of the hub vehicles 20-1, in order to share the predetermined data with the client vehicles 20-2 and 20-3. Thus, according to the present disclosure, inter-vehicle sharing of files can be efficiently performed.

### Program

A computer that is capable of executing program instructions can also be used to function as the information processing device 10 or the control device 21 described above. The program is capable of causing the computer to function as the information processing device 10 or the control device 21, by causing the computer to execute the above-described operations.

The program can be stored in a non-transitory computer-readable medium. Examples of the non-transitory computer-readable medium include flash memory, a magnetic recording device, an optical disc, a magneto-optical recording medium, and ROM. The program is distributed by selling, dispensing, or lending a portable medium such as a secure digital (SD) card, a digital versatile disc (DVD), a compact disc read only memory (CD-ROM), or the like, in which the program is stored, for example. The program may be distributed by storing the program in a storage of a server and transferring the program from the server to other computers. The program may be provided as a program product.

The computer temporarily stores the program stored in the portable medium or the program transferred from a server, for example, in a storage unit. The computer then reads the program stored in the storage unit by a processor, and executes processing in accordance with the program that is read out by the processor.

The computer may read the program directly from the portable medium and execute the processing in accordance with the program. Each time the program is transferred from the server to the computer, the computer may successively execute the processing in accordance with the program that is received. The processing may be executed by a so-called application service provider (ASP) type service, which implements functions only by issuing execution instructions and acquiring results, without transferring a program from a server to a computer. The program includes information that is to be provided for processing by an electronic computer, and that is equivalent to a program. For example, data that is not a direct command to a computer but has a nature of defining processing performed by the computer corresponds to "that equivalent to a program".

Although the above embodiment has been described as a typical example, various modifications and changes may be made without departing from the spirit and scope of the present disclosure. For example, a plurality of component blocks or process steps described in the embodiment can be combined into one, one component block or processing step can be divided into a plurality.

A part of the embodiment of the present disclosure is exemplified below. However, it should be noted that embodiments of the present disclosure are not limited to these.

### [Appendix 1]

An information processing device including a control unit, in which
the control unit is configured to
receive vehicle information from each of a plurality of vehicles indicating at least one of status and position of each of the vehicles,
decide on hub vehicles to serve as hubs for providing data, from among the vehicles based on the vehicle information,
transmit predetermined data to the hub vehicles,
decide on, for each of the hub vehicles, client vehicles with which the predetermined data is to be shared, based on the vehicle information, and
transmit, to each of the hub vehicles, information for identifying the corresponding client vehicles, to share the predetermined data with the client vehicles.

### [Appendix 2]

The information processing device according to Appendix 1, in which deciding of each of the hub vehicles includes deciding from among the vehicles, based on the vehicle information, a vehicle that falls under at least one condition of
a vehicle with surplus power of or above a predetermined threshold value,
a vehicle with surplus data capacity of or above a predetermined threshold value,
a vehicle that has been parked for a long time,
a vehicle that is expected to be parked for a long time,
a vehicle regarding which another vehicle has been within a predetermined range for a certain amount of time or more, and
a vehicle connected to public Wi-Fi,
to be the hub vehicle.

### [Appendix 3]

The information processing device according to Appendix 1, in which deciding of each of the hub vehicles includes deciding from among the vehicles, based on the vehicle information, a vehicle that falls under any one condition of
whether a vehicle with surplus power of or above a predetermined threshold value,
whether a vehicle with surplus data capacity of or above a predetermined threshold value,
whether a vehicle that has been parked for a long time,
whether a vehicle that is expected to be parked for a long time,
whether a vehicle regarding which another vehicle has been within a predetermined range for a certain amount of time or more, and
whether a vehicle connected to public Wi-Fi,
in this order of priority, to be the hub vehicle.

### [Appendix 4]

The information processing device according to any one of Appendices 1 to 3, in which deciding of the client vehicles includes
deciding on vehicles that are determined to be the same as or resemblant to the hub vehicles with respect to at least one of vehicle class and model, to be the client vehicles.

### [Appendix 5]

The information processing device according to any one of Appendices 1 to 4, in which the control unit is further configured to,
for each of the hub vehicles, relieve, when a predetermined amount of time has elapsed since the hub vehicle was decided to be a hub vehicle, or when a count of times that the predetermined data has been transmitted to the hub vehicle exceeds a predetermined count of times, the hub vehicle from being the hub vehicle.

### [Appendix 6]

The information processing device according to any one of Appendices 1 to 5, in which the control unit is further configured to
provide the hub vehicles with a reward in accordance with an amount of data transmitted to the client vehicles.

### [Appendix 7]

A vehicle that communicates with an information processing device, in which the vehicle is configured to
transmit vehicle information indicating at least one of status and position of the vehicle to the information processing device,
receive predetermined data from the information processing device when the vehicle is decided on by the information processing device to be a hub vehicle to serve as a hub for providing data, based on the vehicle information, and
transmit, upon receiving identification information identifying client vehicles with which the predetermined data is to be shared from the information processing device, the predetermined data received from the information processing device to the client vehicles identified by the identification information.

### [Appendix 8]

The vehicle according to Appendix 7, in which the vehicle is further configured to, upon receiving information identifying the client vehicles from the information processing device, receive from the client vehicles a version of the predetermined data stored in the client vehicles, and transmit to the client vehicles just differential data between that version of the predetermined data and a latest version of the predetermined data, or transmit just compressed data of the differential data.

### [Appendix 9]

The vehicle according to Appendix 7 or 8, in which the vehicle is configured to, when the information processing device decides on the vehicle to be the hub vehicle, transmit the predetermined data to the client vehicles,
when a predetermined count or more of the client vehicles are stopped in a vicinity of the vehicle,
when, at an intersection, the client vehicles are stopped at a traffic light, or when the vehicle passes the client vehicles traveling in opposite directions,
when, on an expressway, relative speed between the vehicle and the client vehicles is equal to or less than a threshold value, or
when the vehicle is being charged or in pre-cooling operations.

### [Appendix 10]

The vehicle according to any one of Appendices 7 to 9, in which, when falling under at least one condition of
surplus power of or above a predetermined threshold value,
surplus data capacity of or above a predetermined threshold value,
having been parked for a long time,
expected to be parked for a long time,
another vehicle has been within a predetermined range for a certain amount of time or more, and
connected to public Wi-Fi,
the information processing device decides on the vehicle to be the hub vehicle.

### [Appendix 11]

The vehicle according to any one of Appendices 7 to 9, in which, when falling under at least one condition of whether a vehicle with surplus power of or above a predetermined threshold value,
whether a vehicle with surplus data capacity of or above a predetermined threshold value,
whether a vehicle that has been parked for a long time,
whether a vehicle that is expected to be parked for a long time,
whether a vehicle regarding which another vehicle has been within a predetermined range for a certain amount of time or more, and
whether a vehicle connected to public Wi-Fi,
in this order of priority, the information processing device decides on the vehicle to be the hub vehicle.

### [Appendix 12]

A vehicle that communicates with an information processing device, in which the vehicle is configured to
transmit vehicle information indicating at least one of status and position of the vehicle to the information processing device, and
upon the information processing device deciding on the vehicle to be a client vehicle that shares predetermined data, based on the vehicle information, receive predetermined data from a hub vehicle that has been decided on, by the information processing device, to be a vehicle to serve as a hub for providing data, based on the vehicle information.

### [Appendix 13]

The vehicle according to Appendix 12, in which the vehicle is further configured to transmit a version of the predetermined data that is stored in the vehicle, to the hub vehicle, and to receive from the hub vehicle just differential data between that version of the predetermined data and a latest version of the predetermined data, or just compressed data of the differential data.

### [Appendix 14]

The vehicle according to Appendix 12 or 13, in which, when the vehicle is the same as or resemblant to the hub vehicle with respect to at least one of vehicle class and model, the information processing device decides on the vehicle to be the client vehicle.

### [Appendix 15]

An information processing method including an information processing device executing
receiving vehicle information from each of a plurality of vehicles indicating at least one of status and position of each of the vehicles,
deciding on hub vehicles to serve as hubs for providing data, from among the vehicles based on the vehicle information,
transmitting predetermined data to the hub vehicles,
deciding, for each of the hub vehicles, client vehicles with which the predetermined data is to be shared, based on the vehicle information, and
transmitting, to each of the hub vehicles, information for identifying the corresponding client vehicles, to share the predetermined data with the client vehicles.

### [Appendix 16]

The information processing device according to Appendix 15, in which deciding of each of the hub vehicles includes deciding from among the vehicles, based on the vehicle information, a vehicle that falls under any one condition of
a vehicle with surplus power of or above a predetermined threshold value,
a vehicle with surplus data capacity of or above a predetermined threshold value,
a vehicle that has been parked for a long time,
a vehicle that is expected to be parked for a long time,
a vehicle regarding which another vehicle has been within a predetermined range for a certain amount of time or more, and
a vehicle connected to public Wi-Fi,
to be the hub vehicle.

### [Appendix 17]

The information processing device according to Appendix 15, in which deciding of each of the hub vehicles includes deciding from among the vehicles, based on the vehicle information, a vehicle that falls under any one condition of
whether a vehicle with surplus power of or above a predetermined threshold value,
whether a vehicle with surplus data capacity of or above a predetermined threshold value,
whether a vehicle that has been parked for a long time,
whether a vehicle that is expected to be parked for a long time,
whether a vehicle regarding which another vehicle has been within a predetermined range for a certain amount of time or more, and
whether a vehicle connected to public Wi-Fi,
in this order of priority, to be the hub vehicle.

### [Appendix 18]

The information processing device according to any one of Appendices 15 to 17, in which deciding of the client vehicles includes
deciding on vehicles that are determined to be the same as or resemblant to the hub vehicles with respect to at least one of vehicle class and model, to be the client vehicles.

### [Appendix 19]

The information processing method according to any one of Appendices 15 to 18, further including, for each of the hub vehicles, relieving, when a predetermined amount of time has elapsed since the hub vehicle was decided to be a hub vehicle, or when a count of times that the predetermined data has been transmitted to the hub vehicle exceeds a predetermined count of times, the hub vehicle from being the hub vehicle.

### [Appendix 20]

The information processing method according to any one of Appendices 15 to 19, further including providing the hub vehicle with a reward in accordance with an amount of data transmitted to the client vehicles.

## Claims

1. An information processing device (10), comprising
a control unit (12), wherein
the control unit (12) is configured to
receive vehicle information from each of a plurality of vehicles (20) indicating at least one of status and position of each of the vehicles (20),
decide on hub vehicles (20-1) to serve as hubs for providing data, from among the vehicles (20) based on the vehicle information,
transmit predetermined data to the hub vehicles (20-1),
decide on, for each of the hub vehicles (20-1), client vehicles (20-2, 20-3) with which the predetermined data is to be shared, based on the vehicle information, and
transmit, to each of the hub vehicles (20-1), information for identifying the corresponding client vehicles (20-2, 20-3), to share the predetermined data with the client vehicles (20-2, 20-3).

2. The information processing device (10) according to claim 1, wherein
deciding on hub vehicles (20-1) to serve as hubs for providing data includes deciding from among the vehicles (20), based on the vehicle information, a vehicle that falls under at least one condition of
a vehicle with surplus power of or above a predetermined threshold value,
a vehicle with surplus data capacity of or above a predetermined threshold value,
a vehicle that has been parked for a long time,
a vehicle that is expected to be parked for a long time,
a vehicle regarding which another vehicle has been within a predetermined range for a certain amount of time or more, and
a vehicle connected to public Wi-Fi,
to be the hub vehicle (20-1).

3. The information processing device (10) according to claim 1, wherein
deciding on hub vehicles (20-1) to serve as hubs for providing data includes deciding from among the vehicles (20), based on the vehicle information, a vehicle that falls under at least one condition of
whether a vehicle with surplus power of or above a predetermined threshold value,
whether a vehicle with surplus data capacity of or above a predetermined threshold value,
whether a vehicle that has been parked for a long time,
whether a vehicle that is expected to be parked for a long time,
whether a vehicle regarding which another vehicle has been within a predetermined range for a certain amount of time or more, and
whether a vehicle connected to public Wi-Fi,
in this order of priority, to be the hub vehicle (20-1).

4. The information processing device (10) according to any preceding claims, wherein deciding on the client vehicles (20-2, 20-3) includes
deciding on vehicles (20) that are determined to be the same as or resemblant to the hub vehicles (20-1) with respect to at least one of vehicle class and model, to be the client vehicles (20-2, 20-3).

5. The information processing device (10) according to any preceding claim, wherein the control unit (12) is further configured to,
for each of the hub vehicles (20-1), relieve, when a predetermined amount of time has elapsed since the hub vehicle (20-1) was decided to be a hub vehicle, or when a count of times that the predetermined data has been transmitted to the hub vehicle (20-1) exceeds a predetermined count of times, the hub vehicle (20-1) from being the hub vehicle.

6. The information processing device (10) according to any preceding claim, wherein the control unit (12) is further configured to
provide the hub vehicles (20-1) with a reward in accordance with an amount of data transmitted to the client vehicles (20-2, 20-3).

7. A vehicle (20) that communicates with an information processing device (10), wherein
the vehicle (20) is configured to
transmit vehicle information indicating at least one of status and position of the vehicle (20) to the information processing device (10),
receive predetermined data from the information processing device (10) when the vehicle (20) is decided on by the information processing device (10) to be a hub vehicle (20-1) to serve as a hub for providing data, based on the vehicle information, and
transmit, upon receiving identification information identifying client vehicles (20-2, 20-3) with which the predetermined data is to be shared from the information processing device (10), the predetermined data received from the information processing device (10) to the client vehicles (20-2, 20-3) identified by the identification information.

8. The vehicle (20) according to claim 7, wherein the vehicle (20) is further configured to, upon receiving information identifying the client vehicles (20-2, 20-3) from the information processing device (10), receive from the client vehicles (20-2, 20-3) a version of the predetermined data stored in the client vehicles (20-2, 20-3), and transmit to the client vehicles (20-2, 20-3) just differential data between that version of the predetermined data and a latest version of the predetermined data, or transmit just compressed data of the differential data.

9. The vehicle (20) according to claim 7 or claim 8, wherein
the vehicle (20) is configured to, when the information processing device (10) decides on the vehicle (20) to be the hub vehicle (20-1), transmit the predetermined data to the client vehicles (20-2, 20-3),
when a predetermined count or more of the client vehicles (20-2, 20-3) are stopped in a vicinity of the vehicle (20),
when, at an intersection, the client vehicles (20-2, 20-3) are stopped at a traffic light, or when the vehicle (20) passes the client vehicles (20-2, 20-3) traveling in opposite directions,
when, on an expressway, relative speed between the vehicle (20) and the client vehicles (20-2, 20-3) is equal to or less than a threshold value, or
when the vehicle (20) is being charged or in pre-cooling operations.

10. The vehicle (20) according to any of claims 7 to 9, wherein, when falling under at least one condition of
surplus power of or above a predetermined threshold value,
surplus data capacity of or above a predetermined threshold value,
having been parked for a long time,
expected to be parked for a long time,
another vehicle has been within a predetermined range for a certain amount of time or more, and
connected to public Wi-Fi,
the information processing device (10) decides on the vehicle (20) to be the hub vehicle (20-1).

11. The vehicle (20) according to any of claims 7 to 9, wherein, when falling under any one condition of
whether a vehicle with surplus power of or above a predetermined threshold value, whether a vehicle with surplus data capacity of or above a predetermined threshold value,
whether a vehicle that has been parked for a long time,
whether a vehicle that is expected to be parked for a long time,
whether a vehicle regarding which another vehicle has been within a predetermined range for a certain amount of time or more, and
whether a vehicle connected to public Wi-Fi,
in this order of priority, the information processing device (10) decides on the vehicle (20) to be the hub vehicle (20-1).

12. A vehicle (20) that communicates with an information processing device (10), wherein the vehicle (20) is configured to transmit vehicle information indicating at least one of status and position of the vehicle (20) to the information processing device (10), and upon the information processing device (10) deciding on the vehicle (20) to be a client vehicle (20-2, 20-3) that shares predetermined data, based on the vehicle information, receive predetermined data from a hub vehicle (20-1) that has been decided on, by the information processing device (10), to be a vehicle to serve as a hub for providing data, based on the vehicle information.

13. The vehicle (20) according to claim 12, wherein the vehicle (20) is further configured to transmit a version of the predetermined data that is stored in the vehicle (20), to the hub vehicle (20-1), and to receive from the hub vehicle (20-1) just differential data between that version of the predetermined data and a latest version of the predetermined data, or just compressed data of the differential data.

14. The vehicle (20) according to claim 12 or claim 13, wherein, when the vehicle (20) is the same as or resemblant to the hub vehicle (20-1) with respect to at least one of vehicle class and model, the information processing device (10) decides on the vehicle (20) to be the client vehicle (20-2, 20-3).

15. An information processing method comprising
an information processing device (10) executing
receiving vehicle information from each of a plurality of vehicles (20) indicating at least one of status and position of each of the vehicles (20),
deciding on hub vehicles (20-1) to serve as hubs for providing data, from among the vehicles (20) based on the vehicle information,
transmitting predetermined data to the hub vehicles (20-1),
deciding, for each of the hub vehicles (20-1), client vehicles (20-2, 20-3) with which the predetermined data is to be shared, based on the vehicle information, and
transmitting, to each of the hub vehicles (20-1), information for identifying the corresponding client vehicles (20-2, 20-3), to share the predetermined data with the client vehicles (20-2, 20-3).
